## Europäisches Patentamt
## European Patent Office
## Office européen des brevets

(19) 

(11) Numéro de publication: **0 245 167**
**B1**

(12) # FASCICULE DE BREVET EUROPEEN

(45) Date de publication du fascicule du brevet:
**27.06.90**

(51) Int. Cl.⁵: **G21C 13/06**

(21) Numéro de dépôt: **87401012.7**

(22) Date de dépôt: **30.04.87**

(54) Bouchon-couvercle du coeur d'un réacteur nucléaire à neutrons rapides.

(30) Priorité: **05.05.86 FR 8606476**

(43) Date de publication de la demande:
**11.11.87 Bulletin 87/46**

(45) Mention de la délivrance du brevet:
**27.06.90 Bulletin 90/26**

(84) Etats contractants désignés:
**DE GB IT**

(56) Documents cités:
**EP-A- 0 108 691**
**EP-A- 0 127 540**
**EP-A- 0 160 603**
**FR-A- 2 289 031**

(73) Titulaire: **FRAMATOME, Tour Fiat 1, Place de la Coupole,
F-92400 Courbevoie(FR)**

(72) Inventeur: **Bardot, Alain, 9 Chemin des Charretiers,
F-91700 Villiers Sur Orge(FR)**

(74) Mandataire: **Moncheny, Michel et al, c/o Cabinet
Lavoix 2 Place d'Estienne d'Orves, F-75441 Paris
Cedex 09(FR)**

## Description

L'invention concerne le bouchon-couvercle du coeur d'un réacteur nucléaire à neutrons rapides.

Les réacteurs nucléaires à neutrons rapides sont généralement refroidis par un métal liquide tel que le sodium et comportent une cuve fermée par une dalle horizontale de grande épaisseur et remplie par du sodium liquide de refroidissement dans lequel plonge le coeur du réacteur. Au-dessus du coeur, on dispose un ensemble appelé "bouchon-couvercle du coeur" qui supporte les tubes fourreaux des barres de commande et toute l'instrumentation du coeur comprenant en particulier les tubes de prélèvement de sodium à la sortie des assemblages et les thermocouples pour la mesure de température dans les assemblages du coeur. Ce bouchon-couvercle du coeur assure également, par sa partie inférieure, la déflexion du courant de sodium sortant du coeur pour le diriger vers les échangeurs intermédiaires à la périphérie de la cuve.

Le bouchon-couvercle du coeur est constitué par une enveloppe de forme générale cylindrique à axe vertical dont la partie supérieure est fixée sur une plaque de support reposant sur un bouchon tournant monté sur la dalle du réacteur. Le bouchon tournant comporte une ouverture permettant le passage du bouchon-couvercle du coeur ; le bouchon tournant est monté mobile en rotation autour d'un axe vertical sur la dalle de fermeture de la cuve du réacteur.

Le bouchon-couvercle du coeur comporte également un ensemble de tubes verticaux dont certains sont destinés à recevoir les barres de commande du réacteur et les autres, les dispositifs d'instrumentation permettant d'effectuer des mesures neutroniques et des mesures de température dans le coeur et de prélever du sodium à la sortie des assemblages combustibles constituant le coeur. L'extrémité inférieure de l'enveloppe du bouchon-couvercle du coeur se trouve juste au-dessus de la partie supérieure des assemblages et reçoit une plaque transversale fortement ajourée qui est fixée sur l'enveloppe cylindrique. Les ouvertures traversant cette plaque ajourée permettent d'une part de laisser le passage au sodium de refroidissement des assemblages et d'autre part d'assurer un certain maintien et un certain guidage des tubes recevant les barres de commande et des tubes d'instrumentation.

Au-dessus de la plaque ajourée, une autre plaque transversale par rapport à l'enveloppe cylindrique permet de réaliser la déflection et la dispersion du sodium sortant du coeur. Cette plaque comporte un premier ensemble de perçages dans lesquels sont fixés les tubes d'instrumentation, un second ensemble de perçages traversés par les tubes guides des barres de commande et quelques trous de passage du sodium permettant d'assurer un équilibre de niveau et de pression entre la partie intérieure et la partie extérieure à l'enveloppe du bouchon-couvercle du coeur. La plaque de déflection comporte donc, à l'inverse de la plaque ajourée, une section totale de passage du sodium très faible. Le sodium est donc dévié par cette plaque latéralement pour atteindre les échangeurs de chaleur plongés dans la cuve du réacteur, après avoir traversé l'enveloppe du bouchon-couvercle du coeur par un ensemble d'ouvertures pratiquées dans cette enveloppe.

Dans les bouchons-couvercles de coeur connus et utilisés actuellement, la plaque transversale de déflection est fixée à l'enveloppe cylindrique de façon telle qu'ils subissent des contraintes très élevées qui sont préjudiciables à une longue durée de vie.

En effet, la partie inférieure du bouchon-couvercle du coeur est soumise à des contraintes extrêmement élevées dues aux conditions hydrodynamiques d'écoulement du sodium et aux conditions thermiques régnant dans cette zone de la cuve du réacteur. La température qui correspond à la température du sodium sortant du coeur y est élevée et cette température peut connaître des variations très rapides, en particulier lors des arrêts d'urgence du réacteur.

Le but de l'invention est donc de proposer un bouchon-couvercle du coeur d'un réacteur nucléaire à neutrons rapides assurant la fixation et le guidage des barres de commande et de l'instrumentation du coeur ainsi que la déflection et la dispersion du liquide de refroidissement du réacteur, comportant, de façon connue, une enveloppe cylindrique disposée avec son axe vertical, une plaque support solidaire de la partie supérieure de l'enveloppe venant reposer sur un bouchon tournant fermant la cuve du réacteur à l'intérieur de laquelle le coeur est immergé dans le liquide de refroidissement, un ensemble de tubes verticaux destinés en particulier à recevoir les barres de commande du réacteur, fixés à leur partie supérieure à la plaque support et disposés à l'intérieur de l'enveloppe suivant des directrices ou rangées coaxiales à cette enveloppe, une plaque transversale ajourée fixée à l'extrémité inférieure de l'enveloppe laissant le passage au liquide de refroidissement et aux tubes verticaux dont elle assure l'entretoisement et au moins une plaque transversale de déflection du liquide de refroidissement sur laquelle sont fixés les tubes verticaux de l'ensemble qui servent pour les mesures dans le coeur, située au-dessus de la plaque ajourée, ce bouchon-couvercle du coeur subissant des contraintes acceptables, dans sa partie inférieure venant en contact avec le liquide de refroidissement en circulation à haute température.

Dans ce but, la plaque transversale de déflection est suspendue à l'enveloppe par l'intermédiaire d'une pluralité de lames élastiques métalliques sensiblement verticales, régulièrement réparties à la périphérie de l'enveloppe et soudées à cette enveloppe par leur extrémité supérieure et au bord de la plaque de déflection par leur extrémité inférieure, au niveau d'ouvertures réalisées dans cette enveloppe permettant un débattement radial, et cette plaque de déflection est également solidaire d'une partie des tubes recevant des barres de commande situés sur une seule rangée coaxiale à l'enveloppe.

Afin de bien faire comprendre l'invention, on va maintenant décrire, à titre d'exemple non limitatif, un mode de réalisation d'un bouchon-couvercle suivant l'invention, d'un réacteur nucléaire à neutrons rapides refroidi par du sodium liquide.

La figure 1 est une vue en élévation avec coupe partielle de l'ensemble du bouchon-couvercle du coeur en position de service dans la cuve du réacteur.

La figure 2 est une vue agrandie du détail A de la figure 1, montrant une lame de suspension de la plaque de déflection.

La figure 3 est une vue en coupe suivant III-III de la figure 2.

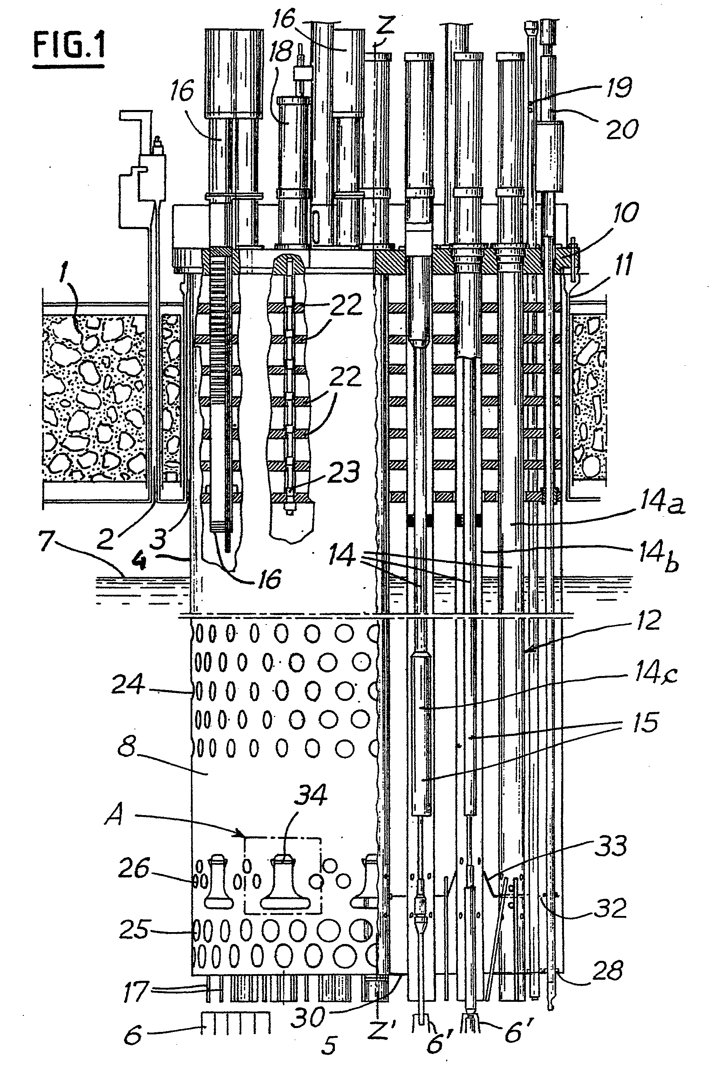

Sur la figure 1, on voit une partie des bouchons tournants disposés dans la dalle de fermeture de la cuve d'un réacteur nucléaire à neutrons rapides. L'un des bouchons tournants appelé petit bouchon tournant est monté dans une ouverture 2 de l'autre bouchon tournant, appelé grand tournant bouchon.

Ces bouchons sont montés rotatifs l'un par rapport à l'autre et par rapport à la dalle du réacteur, autour d'axes verticaux. Le petit bouchon tournant comporte une ouverture 3 dans laquelle est monté le bouchon-couvercle du coeur désigné de façon générale par le repère 4.

Ce bouchon-couvercle du coeur 4 est disposé à la verticale et au-dessus du coeur 5, de façon que son extrémité inférieure soit juste au-dessus des têtes d'assemblage 6 et séparées de celles-ci par une faible distance.

La cuve du réacteur nucléaire est remplie de sodium, le niveau supérieur 7 de ce sodium liquide étant bien au-dessus du niveau supérieur des têtes d'assemblage 6. Le coeur est donc complètement immergé dans le sodium liquide, de même que la plus grande partie du bouchon-couvercle du coeur 4.

Le bouchon-couvercle comporte une enveloppe cylindrique à axe vertical 8 fixée à sa partie supérieure à une plaque de support 10 reposant, par l'intermédiaire d'une virole 11, sur le petit bouchon tournant, lui-même supporté par la dalle du réacteur, par l'intermédiaire du grand bouchon tournant. La virole 11 délimite l'ouverture 3 de passage du bouchon-couvercle du coeur et l'enveloppe cylindrique 8 a un diamètre qui n'est que de très peu inférieur au diamètre intérieur de la virole de support et de passage 11.

La plaque support 10 en acier de forte épaisseur permet de réaliser une protection biologique contre les radiations, à la verticale du bouchon-couvercle 4. Cette plaque support 10 porte également un ensemble de tubes 12 placés verticalement à l'intérieur de l'enveloppe cylindrique 8 du bouchon-couvercle 4. Une grande partie des tubes 12 est constituée par des tubes guides 14 dans lesquels on déplace des ensembles 15 auxquels sont fixés les éléments absorbants des barres de commande du réacteur disposés dans des fourreaux 6' qui viennent s'intercaler entre les assemblages du coeur.

Les mécanismes de déplacement des barres de commande sont disposés au-dessus de la plaque support 10, dans le prolongement des tubes 14.

Les tubes 14 sont disposés suivant trois rangées concentriques ayant pour axe l'axe vertical ZZ' du bouchon-couvercle 4. On a représenté sur la figure 1, un tube guide 14a appartenant à la rangée externe, un tube 14b appartenant à la partie centrale et un tube 14c appartenant à la rangée interne.

L'ensemble de tubes 12 du bouchon-couvercle 4 comporte également des tubes de passage de thermocouples 16 dont la partie supérieure permet de rassembler un grand nombre de thermocouples, pour les relier aux divers circuits d'utilisation des mesures de température effectuées. Chacun des thermocouples est introduit dans un tube épais de petit diamètre 17 qui débouche à la partie inférieure du bouchon-couvercle 4, à la verticale d'un assemblage 6 dans lequel on réalise la mesure de température.

De la même façon, l'ensemble 12 comporte des enveloppes tubulaires 18 permettant le passage de tubes de petit diamètre soudés à l'extrémité supérieure des tubes-guides de thermocouple 17 et par lesquels sont effectués des prélèvements de sodium à la sortie de chaque assemblage. Ces prélèvements de sodium permettent de déterminer, par mesure de radioactivité des prélèvements, la présence éventuelle d'une rupture de gaine dans un assemblage.

Enfin, l'ensemble de tubes 12 comporte également des tubes d'instrumentation tels que 19 et 20 permettant respectivement des mesures de flux neutroniques et une visualisation des têtes d'assemblages grâce à un faisceau d'ultrasons.

En plus de la plaque support 10, la partie supérieure du bouchon-couvercle 4 comporte une protection biologique constituée par des plaques parallèles 22 fixées par des tirants 23 sous la plaque support 10 dans l'épaisseur des bouchons 1.

L'enveloppe cylindrique 8 du bouchon-couvercle 4 comporte plusieurs jeux d'ouvertures 24, 25 et 26 permettant au sodium de traverser l'enveloppe 8.

A l'extrémité inférieure de l'enveloppe 8, est fixée, par soudage, une plaque transversale 28 placée dans un plan de section droite de l'enveloppe 8 et percée de nombreuses ouvertures dans des positions permettant le passage et le guidage de l'extrémité des tubes de l'ensemble 12. La plaque ajourée 28 comporte en particulier un ensemble d'ouvertures situées sur trois rangées concentriques permettant le passage des tubes guides 14 recevant les barres de commande du réacteur. La plaque transversale 28 comporte également un ensemble de trous de petit diamètre permettant le passage des tubes de thermocouples 17 et de prélèvement de sodium. D'autres ouvertures traversant la plaque 28 sont également prévues pour recevoir la partie inférieure des tubes d'instrumentation tels que 19 et 20.

Enfin, la plaque 28 comporte des ouvertures 30 pour le passage du sodium liquide sortant du coeur, entre les ouvertures de guidage des tubes 12. La plaque 28 est donc ajourée sur une proportion très importante de sa surface pouvant aller jusqu'à 90 %.

Au-dessus de la plaque transversale ajourée 28 est fixée, à l'intérieur de l'enveloppe cylindrique 8 du bouchon-couvercle, une seconde plaque transversale 32 parallèle à la plaque 28 assurant la déflection latérale du sodium liquide sortant du coeur et pénétrant dans l'enveloppe 8 du bouchon ainsi que le maintien des tubes d'instrumentation tels que les tubes 17 qui sont fixés à cette plaque. Cette plaque dont le diamètre est voisin de quatre mètres a une épaisseur très faible par rapport à son diamètre, par exemple 0,020 m.

La plaque 32 comporte des trous permettant le passage des tubes 14.

En dehors de ces ouvertures permettant le passage des tubes, la plaque 32 ne comporte que quelques ouvertures supplémentaires de faible dimension pour équilibrer le niveau de sodium à l'intérieur et à l'extérieur de l'enveloppe du bouchon-couvercle du coeur. Le flux de sodium sortant du coeur et traversant la plaque ajourée 28 par les ouvertures 30 est donc dévié par la plaque 32 qui en assure la déflection latérale et le passage par les ouvertures 25 ménagées dans la partie inférieure de l'enveloppe 8. Le sodium chaud peut ainsi parvenir aux échangeurs de chaleur intermédiaires plongeant dans la cuve.

La plaque 32 est percée sur une proportion de sa surface beaucoup plus faible que la plaque ajourée 28.

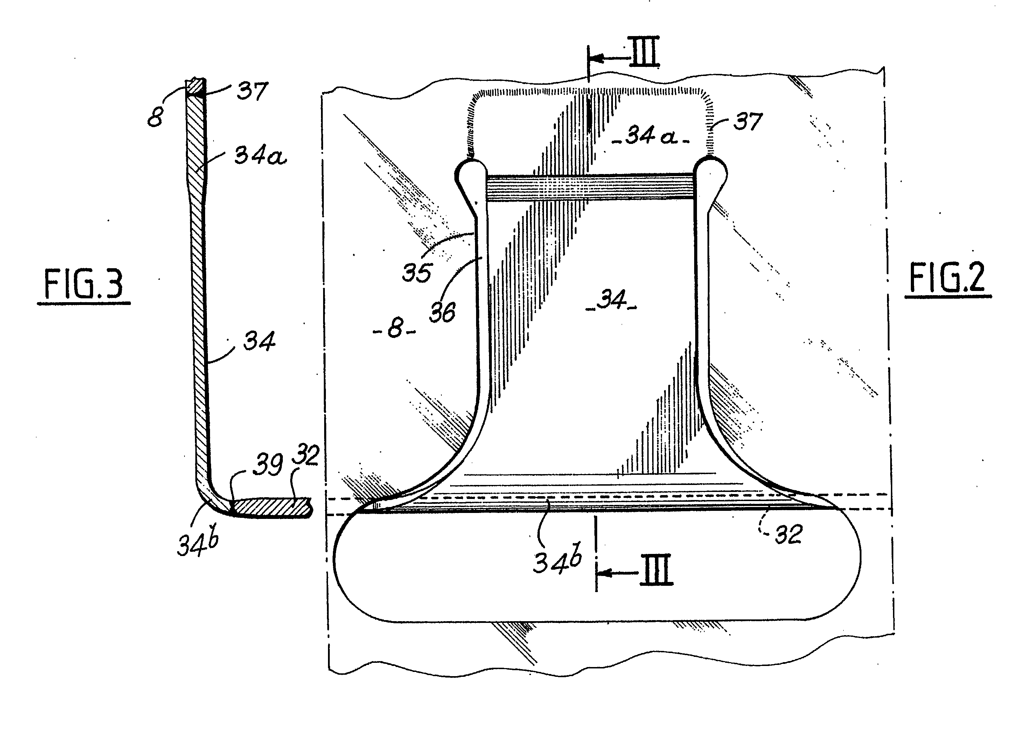

Selon l'invention, la plaque 32 est fixée dans l'enveloppe 8 par l'intermédiaire de dispositifs à lames flexibles 34 qui seront décrits plus en détail en référence aux figures 2 et 3.

La plaque 32 est de plus fixée aux tubes guides tels que 14b disposé sur la rangée médiane coaxiale à l'enveloppe 8, par l'intermédiaire de petites viroles tronconiques 33 dont chacune est soudée d'une part à la plaque 32 le long de sa grande base et suivant une ouverture de la plaque 32 d'un diamètre sensiblement supérieur au diamètre du tube 14b et d'autre part, par l'intermédiaire de sa petite base au tube 14b correspondant. Les autres tubes tels que 14a et 14c situés sur les rangées externe et interne passent librement à travers des ouvertures de la plaque 32, la plaque 32 ne jouant qu'un rôle d'entretoise pour ces tubes 14a et 14c.

Les plaques 28 et 32 sont donc différentes d'une part en ce que la plaque 28 est ajourée sur une proportion beaucoup plus grande de sa surface que la plaque 32 et d'autre part en ce que la plaque 28 ne joue qu'un rôle d'entretoise pour les tubes 12, alors que les tubes d'instrumentation et les tubes guides situés sur une seule rangée sont fixés à la plaque 32.

On va maintenant se reporter aux figures 2 et 3 pour décrire les lames flexibles 34 assurant la suspension de la plaque de déflection 32 à l'intérieur de l'enveloppe 8 du bouchon-couvercle.

Chacune des lames flexibles 34 est diposée dans une découpe en forme de T renversé à angles arrondis ménagée dans l'enveloppe cylindrique 8. Pour la suspension de la plaque 32, on a prévu douze découpes identiques 35 régulièrement réparties à la périphérie de l'enveloppe 8, dans des positions angulaires situées à 30° les unes des autres ; dans chacune des découpes 35 est fixée une lame flexible 34 de forme correspondante dont la partie supérieure 34a de plus forte épaisseur que la partie courante est fixée par l'intermédiaire d'un joint de soudure 37, sur l'enveloppe cylindrique 8 dans une découpe en forme de U inversé.

La lame flexible 34 en une nuance d'acier soudable à l'enveloppe cylindrique 8 est totalement encastrée, par sa partie supérieure 34a en forme de U inversé, dans l'enveloppe 8 dont elle est rigidement solidaire. La partie de la lame flexible 34 située en-dessous de la partie à forte épaisseur 34a est en revanche engagée avec un jeu 36 relativement important dans la découpe 35. La lame 34 comporte une partie inférieure 34b recourbée vers l'intérieur de l'enveloppe 8 et d'une largeur croissante, depuis la partie médiane de la lame 34 jusqu'à son extrémité qui est fixée par l'intermédiaire d'un joint de soudure 39 sur la périphérie de la plaque de déflection 32.

La partie inférieure recourbée et élargie 34b de la lame flexible 34 est disposée au niveau de la partie supérieure de l'élargissement en T de la découpe 35.

Les lames flexibles 34 peuvent ainsi avoir un débattement dans les directions radiales de la plaque 32 et de l'enveloppe 8, par flexion de la partie supérieure de la lame, en-dessous de la partie de jonction 34a. La flexion de la lame 34 a donc lieu dans une zone où le métal de la lame n'a pas été modifié par la soudure 37.

Le débattement radial des lames flexibles 34 permet une libre dilatation et un libre déplacement de la plaque transversale 32 suspendue à ces lames 34, dans les directions radiales de l'enveloppe 8.

La plaque de déflection 32 est d'autre part fixée à une seule rangée de tubes guides 14, si bien que cette plaque 32 et la zone de l'enveloppe 8 dans laquelle elle est fixée ne subissent que des contraintes limitées sous l'effet des variations de température de ce flux de sodium sortant du coeur.

En outre, la plaque transversale 32 est supportée sans aucun jeu par les lames 34 fixées dans l'enveloppe 8.

L'invention ne se limite pas au mode de réalisation qui vient d'être décrit.

C'est ainsi que les découpes dans l'enveloppe 8 permettant la fixation des lames flexibles de suspension de la plaque de déflection 32 peuvent avoir des formes différentes de celle qui a été décrite, cette forme permettant cependant d'optimiser la répartition des contraintes dans les lames 34 et d'augmenter ainsi la résistance et la durée de vie du dispositif. On peut également imaginer une extrémité inférieure de lames destinée à être fixée sur la périphérie de la plaque de déflection différente de la forme recourbée à 90° qui a été décrite et représentée.

On peut également imaginer des découpes d'une forme différente de la forme en U à angles arrondis permettant de fixer la partie supérieure des lames dans l'enveloppe cylindrique. Cependant, les découpes et les lames correspondantes devront toujours avoir des angles arrondis, pour éviter la concentration des contraintes génératrices de ruptures dans les conditions d'utilisation à haute température du bouchon-couvercle.

Dans l'exemple de réalisation qui a été décrit, le rayon de la directrice circulaire médiane sur laquelle sont disposés les tubes guides 14b fixés à la plaque de déflection 32 était légèrement inférieur à la moitié du rayon de l'enveloppe cylindrique 8. De manière plus générale, le rayon de cette directrice sur laquelle sont situés les tubes fixés à la plaque de déflection, sera de préférence compris entre un tiers et un demi du rayon de l'enveloppe cylindrique.

La fixation entre les tubes guides et la plaque de déflection pourra être réalisée par l'intermédiaire de pièces différentes de viroles tronconiques tel qu'il a été décrit. Cette fixation doit cependant permettre un léger déplacement relatif sous l'effet des contraintes thermiques entre la plaque et le tube guide, par déformation de la pièce de liaison.

L'invention s'applique au bouchon-couvercle du coeur de tout réacteur nucléaire à neutrons rapides refroidi par un liquide.

## Revendications

1.- Bouchon-couvercle du coeur d'un réacteur nucléaire à neutrons rapides assurant la fixation et le guidage des barres de commande et de l'instrumentation du coeur ainsi que la déflection et la dispersion du liquide de refroidissement du réacteur comportant une enveloppe cylindrique (8) disposée avec son axe vertical, une plaque support (10) solidaire de la partie supérieure de l'enveloppe (8) venant reposer sur un bouchon tournant (1) fermant la cuve du réacteur à l'intérieur de laquelle le coeur (5) est immergé dans le liquide de refroidissement, un ensemble de tubes verticaux (12) destinés en particulier à recevoir les barres de commande du réacteur, fixés à leur partie supérieure à la plaque support (10) et disposés à l'intérieur de l'enveloppe (8) suivant plusieurs directrices coaxiales à l'enveloppe (8), une plaque transversale ajourée (28) fixée à l'extrémité inférieure de l'enveloppe (8) laissant le passage au liquide de refroidissement et aux tubes verticaux (12) dont elle assure l'entretoisement et au moins une plaque transversale (32) de déflection du liquide de refroidissement sur laquelle sont fixés les tubes verticaux de l'ensemble (12) qui servent pour les mesures dans le coeur, plaque située au-dessus de la plaque ajourée (28), caractérisé par le fait que la plaque transversale de déflection (32) est suspendue à l'enveloppe (8) par l'intermédiaire d'une pluralité de lames élastiques métalliques (34) sensiblement verticales, régulièrement réparties à la périphérie de l'enveloppe (8) et soudées à cette enveloppe (8) par leur extrémité supérieure (34a) et au bord de la plaque de déflection (32) par leur extrémité inférieure (34b), au niveau d'ouvertures (35) réalisées dans cette enveloppe (8) permettant un débattement radial, et que cette plaque de déflection (32) est également solidaire d'une partie des tubes (14b) recevant des barres de commande et situés sur une seule directrice coaxiale à l'enveloppe (8).

2.- Bouchon-couvercle suivant la revendication 1, caractérisé par le fait que les ouvertures (35) dans l'enveloppe (8) sont des découpes en forme de T renversé et que les lames élastiques (34) ont une forme en T renversé correspondante, leur partie inférieure élargie (34b) étant recourbée à 90° vers l'intérieur pour être soudée au bord de la plaque de déflection (32).

3.- Bouchon-couvercle suivant l'une quelconque des revendications 1 et 2, caractérisé par le fait que les découpes (35) dans l'enveloppe (8) comportent une partie supérieure en forme de U renversé à angles arrondis, les lames (34) comportant une partie de forme correspondante soudée dans la paroi de l'enveloppe (8) le long du contour en U renversé.

4.- Bouchon-couvercle suivant l'une quelconque des revendications 1, 2 et 3, caractérisé par le fait que les tubes (14b) recevant des barres de commande qui sont solidaires de la plaque de déflection (32) sont situés sur une directrice circulaire coaxiale à l'enveloppe dont le rayon est compris entre un tiers et un demi du rayon de l'enveloppe (8).

5.- Bouchon-couvercle suivant l'une quelconque des revendications 1 à 4, caractérisé par le fait que les tubes (14b) recevant les barres de commande et solidaires de la plaque de déflection (32) sont fixés sur cette plaque de déflection (32), par l'intermédiaire de viroles tronconiques (33).

6.- Bouchon-couvercle suivant l'une quelconque des revendications 1 à 5, caractérisé par le fait que la plaque de déflection (32) dont le diamètre est voisin de quatre mètres a une épaisseur de l'ordre de 0,020 mètre.

## Patentansprüche

1. Verschlußdeckel für einen mit schnellen Neutronen arbeitenden Kernreaktor, der die Befestigung und Führung von Steuerstäben und der Instrumentenausrüstung des Kerns sowie die Umlenkung und Verteilung des Kühlmittels des Reaktors gewährleistet, mit einer zylinderförmigen Hülle (8), deren Achse vertikal angeordnet ist, einer Trägerplatte (10), die mit dem oberen Teil der Hülle (8) fest verbunden ist und auf einem drehbaren Deckel ruht, der den Reaktorbehälter schließt, in dessen Inneren der Kern (5) in die Kühlflüssigkeit eingetaucht ist, einer Gruppe von vertikalen Rohren (12), die insbesondere dazu bestimmt sind, die Steuerstäbe des Reaktors aufzunehmen, und die mit ihrem oberen Teil an der Trägerplatte (10) befestigt und im Inneren der Hülle (8) entlang mehrerer zur Hülle (8) koaxial verlaufenden Richtungen angeordnet sind, einer gelochten transversalen Platte (28), die am unteren Ende der Hülle (8) befestigt ist und die die Kühlflüssigkeit und die vertikalen Rohre (12) passieren läßt, wobei letztere durch diese gehaltert werden und mit mindestens einer transversalen Platte (32) zur Umlenkung der Kühlflüssigkeit, auf der die vertikalen Rohre der Rohrgruppe (12) angeordnet sind, die zu Messungen im Reaktorkern dienen, wobei die Platte oberhalb der gelochten Platte (28) angeordnet ist, dadurch gekennzeichnet, daß die transversale Umlenkplatte (32) an der Hülle (8) über eine Vielzahl von elastischen Metallbändern (34) befestigt ist, die im wesentlichen vertikal und gleichmäßig an der Peripherie der Hülle (8) angeordnet mit ihren oberen Enden (34a) an der Hülle (8) und am Rand der Umlenkscheibe (32) mit ihren unteren Enden (34b) auf der Höhe der Öffnungen (35) verschweißt sind, die in dieser Hülle (8) vorgesehen sind, um eine Radialverschiebung zu ermöglichen und dadurch, daß diese Umlenkplatte (32) ebenfalls an einem Teil der Rohre (14b) befestigt ist, die die Steuerstäbe aufnehmen und die auf einer einzigen zur Hülle (8) koaxialen Achse angeordnet sind.

2. Verschlußdeckel nach Anspruch 1, dadurch gekennzeichnet, daß die Öffnungen (35) in der Hülle (8) in Form eines umgekehrten T ausgeschnitten sind und die elastischen Bänder (34) eine entsprechende umgekehrte T-Form aufweisen, wobei ihr unterer verbreiterter Bereich (34b) um 90° nach innen gebogen ist, um am Rand der Umlenkplatte (32) verschweißt zu werden.

3. Verschlußdeckel nach einem der Ansprüche 1 und 2, dadurch gekennzeichnet, daß die Ausschnitte (35) in der Hülle (8) einen oberen Bereich in Form eines umgekehrten U mit abgerundeten Winkeln aufweisen, wobei die Bänder (34) einen entsprechend geformten Teil aufweisen, der an der Wandung der Hülle (8) entlang der Kontur des umgekehrten U verschweißt ist.

4. Verschlußdeckel nach einem der Ansprüche 1, 2 und 3, dadurch gekennzeichnet, daß die Rohre (14b), die die Führungsstäbe aufnehmen, die an der Umlenkplatte (32) befestigt sind, auf einer kreisförmigen Leitlinie koaxial zur Hülle angeordnet sind, dessen Radius zwischen einem Drittel und der Hälfte des Radius der Hülle (8) liegt.

5. Verschlußdeckel nach einem der Ansprüche 1 bis 4, dadurch gekennzeichnet, daß die Rohre (14b), die die Steuerstäbe aufnehmen und die an der Umlenkplatte (32) befestigt sind, auf dieser Umlenkplatte (32) über kegelstumpfförmige Ringe (33) befestigt sind.

6. Verschlußdeckel nach einem der Ansprüche 1 bis 5, dadurch gekennzeichnet, daß die Umlenkplatte (32), deren Durchmesser etwa 4 m beträgt, eine Dicke von etwa 0,02 m hat.

## Claims

1. Cover plug for the core of a fast neutron nuclear reactor for fixing and guiding the control rods and instrumentation of the core and deflecting and dispersing of the coolant liquid of the reactor, comprising a cylindrical barrel (8) disposed with its axis vertical, a support plate (10) integral with the upper part of the barrel (8) bearing on a rotating plug (1) which seals off the vessel of the reactor in which the core (5) is immersed in the coolant liquid, a set of vertical tubes (12) adapted in particular to receive the control rods of the reactor, fixed at their upper ends to the support plate (10) and disposed inside the barrel (8) along a plurality of directrices coaxial with the barrel (8), an apertured transverse plate (28) fixed to the lower end of the barrel (8) allowing the passage of the coolant liquid and the vertical tubes (12) the spacing of which it ensures, and at least one transverse plate (32) for deflecting the coolant liquid on which are fixed the vertical tubes of the set (12) which serve to effect measurements in the core, said plate being located above the apertured plate (28), characterised in that the transverse deflection plate (32) is suspended from the barrel (8) by a plurality of substantially vertical elastically resilient strips (34) evenly spaced apart on the periphery of the barrel (8) and welded to said barrel (8) by their upper ends (34a) and to the edge of the deflection plate (32) by their lower ends (34b), in the region of openings (35) provided in said barrel (8) which allow a radial movement, and in that the deflection plate (32) is also integral with a part of the tubes (14b) receiving control rods and arranged along a single directrix coaxial with the barrel (8).

2. Cover plug according to claim 1, characterised in that the openings (35) in the barrel (8) are cut-outs in the shape of an inverted T and the elastically resilient strips (34) have a corresponding inverted T shape, their widened lower portion (34b) being bent inwardly at 90° for welding to the edge of the deflection plate (32).

3. Cover plug according to claim 1 or 2, characterised in that the cut-outs (35) in the barrel (8) have an upper part in the shape of an inverted U with rounded corners, the strips (34) having a portion of corresponding shape welded in the wall of the barrel (8) along the inverted U shape.

4. Cover plug according to any one of claims 1 to 3, characterised in that the tubes (14b) receiving control rods which are integral with the deflection plate (32) are disposed along a circular directrix coaxial with the barrel and having a radius which is between one third and one half of the radius of the barrel (8).

5. Cover plug according to any of claims 1 to 4, characterised in that the tubes (14b) receiving the control rods and integral with the deflection plate (32) are fixed to said deflection plate (32) by frustoconical sleeves (33).

6. Cover plug according to any one of claims 1 to 5, characterised in that the deflection plate (32), the diameter of which is around 4 metres, has a thickness of the order of 0.020 metre.

**FIG.1**